# EUROPÄISCHE PATENTSCHRIFT

(11) **EP 2 483 577 B1**
(45) Veröffentlichungstag und Bekanntmachung des Hinweises auf die Patenterteilung: **27.11.2013**
(21) Anmeldenummer: 10751623.9
(22) Anmeldetag: 31.08.2010
(51) Int. Cl.: F16H 61/02

(54) **VERFAHREN ZUM STEUERN UND/ODER REGELN EINES AUTOMATISIERTEN GETRIEBES**
METHOD FOR CONTROLLING AND/OR REGULATING AN AUTOMATED TRANSMISSION
PROCÉDÉ DE COMMANDE ET/OU DE RÉGULATION D'UNE BOÎTE DE VITESSES AUTOMATIQUE

(30) Priorität: 29.09.2009 DE 102009045089
(43) Veröffentlichungstag der Anmeldung: 08.08.2012
(73) Patentinhaber: ZF Friedrichshafen AG, 88038 Friedrichshafen (DE)
(72) Erfinder: STAUDINGER, Joachim, 88214 Ravensburg (DE); WÜRTHNER, Maik, 88677 Markdorf (DE); SAUTER, Ingo, 88047 Meckenbeuren (DE); KEMLER, Johannes, 88697 Bermatingen (DE)
(86) Internationale Anmeldenummer: PCT/EP2010/062678
(87) Internationale Veröffentlichungsnummer: WO 2011/039019

(56) Entgegenhaltungen:
- WO-A1-2008/119617
- DE-A1- 10 021 770
- DE-A1- 19 528 625
- DE-A1- 19 939 938
- US-A1- 2006 293 822
- US-A1- 2008 027 612

## Beschreibung

Die vorliegende Erfindung betrifft ein Verfahren zum Steuern und/oder Regeln eines automatisierten Getriebes eines Fahrzeuges, insbesondere eines Nutzfahrzeuges, gemäß der im Oberbegriff des Patentanspruches 1 näher definierten Art.

Beispielsweise aus der Druckschrift WO 2008/119617 A1 ist eine Steuerungsvorrichtung eines automatisierten Schaltgetriebes bekannt, welche ein elektronisches Getriebesteuergerät mit einem Datenspeicher umfasst. Der Datenspeicher umfasst mehrere Steuerdatensätze, die manuell und/oder automatisch auswählbar und zur Steuerung des Stufenschaltgetriebes aktiviert werden. Jede Gruppe von Steuerdatensätzen ist für eine andere Antriebsstrangkonfiguration oder einen anderen Einsatzzweck des Kraftfahrzeuges ausgelegt. Aus der manuell oder automatisch ausgewählten und freigeschalteten Gruppe von Steuerdatensätzen muss jeweils ein für die aktuelle Betriebssituation des Kraftfahrzeuges ausgelegter Steuerdatensatz ausgewählt und aktiviert werden.

Darüber hinaus ist aus der Druckschrift DE 199 39 938 A1 ein Steuersystem für automatische Fahrzeuggetriebe bekannt. Das Steuersystem umfasst Mittel zur Erfassung der Fahrbahnneigung der aktuell befahrenen Straße, die zur Bestimmung eines Neigungsparameters dienen. Ferner wird über ein Navigationssystem die aktuelle Position des Kraftfahrzeuges und die dort vorliegende Fahrbahnneigung ermittelt, wobei die dadurch ermittelte Fahrbahnneigung zur Korrektur des Neigungsparameters verwendet wird. Auf der Basis des korrigierten Neigungsparameters wird eines von mehreren Schaltprogrammen ausgewählt und zur Steuerung des Fahrzeuggetriebes aktiviert.

Die bekannten Steuersysteme haben gemeinsam, dass lediglich der aktuelle Fahrzustand bei den Schalt- und Ansteuerstrategien berücksichtigt wird. Dadurch ergibt sich der Nachteil, dass mögliche Potentiale in Bezug auf den Kraftstoffverbrauch und das Beschleunigungsvermögen bei dem Fahrzeug nicht vollständig genutzt werden.

Gemäß der Druckschrift US 2008/0027612 A, auf der der Oberbegriff des Anspruchs 1 basiert, werden auch zukünftige Streckendaten erfasst und ausgewertet.

Der vorliegenden Erfindung liegt die Aufgabe zu Grunde, ein Verfahren zum Steuern und/oder Regeln eines automatisierten Getriebes eines Fahrzeuges, insbesondere eines Nutzfahrzeuges vorzuschlagen, bei dem die eingesetzten Schalt- und Ansteuerstrategien weiter optimiert werden, um Verbrauchsvorteile zu erzielen.

Diese Aufgabe wird erfindungsgemäß durch die Merkmale des Patentanspruches 1 gelöst, wobei sich weitere Vorteile aus den Unteransprüchen ergeben.

Demzufolge wird ein Verfahren zum Steuern und/oder Regeln eines automatisierten Getriebes eines Fahrzeuges, insbesondere eines Nutzfahrzeuges, vorgeschlagen, bei dem ein Getriebesteuergerät oder dergleichen verwendet wird, in dem mehrere Steuerdatensätze zum Ausführen vorbestimmter Schalt- und/oder Ansteuerstrategien abgespeichert werden, wobei durch das Getriebesteuergerät eine dynamische und/oder statische Umschaltung zwischen verschiedenen Steuerdatensätzen anhand der gegenwärtigen Position und/oder der Art des Fahrzeuges durchgeführt wird. Erfindungsgemäß können auch zukünftige Streckendaten oder dergleichen erfasst und ausgewertet werden, so dass die erfassten, zukünftigen Streckendaten zum Beispiel im Rahmen der Auswertung bestimmten Steuerdatensätzen zugeordnet werden, um eine vorausschauende Ansteuerung des Fahrzeuges zu realisieren.

Auf diese Weise kann nicht nur die Art des Fahrzeuges bei der Ansteuerung berücksichtigt werden, so dass die Getriebesteuerung für mehrere Fahrzeugelinien eingesetzt werden kann, sondern das erfindungsgemäße Verfahren realisiert anhand von gegenwärtigen und/oder zukünftigen Streckendaten Schalt- und Ansteuerstrategien, so dass auch ohne Eingriff des Fahrers beispielsweise bevorstehende Steigungen oder Gefälle bewältigt werden, da quasi vorausschauend diese Streckendaten der noch zu bewältigenden Fahrstrecke des Fahrzeuges bereits dem Steuergerät bekannt sind und entsprechend ausgewertet werden, so dass auch auf zukünftige Ereignisse entsprechend reagiert werden kann. Folglich kann ein geringer Kraftstoffverbrauch und ein optimales Beschleunigungsvermögen bei dem Fahrzeug realisiert werden, indem sich die Schalt- und Ansteuerstrategien an die jeweiligen zukünftigen Straßenverhältnisse anpassen kann.

Erfindungsgemäß sieht das Verfahren vor, dass die erfassten zukünftigen Streckendaten bei der Auswertung mit einer Zuverlässigkeitszahl oder einer Genauigkeitszahl versehen beziehungsweise bewertet werden. Die Zuverlässigkeits- oder Genauigkeitszahl kann die Qualität der erfassten Streckendaten beschreiben. Wenn beispielsweise über eine längere Strecke die Zuverlässigkeits- oder Genauigkeitszahl eine sehr schlechte Qualität der erfassten Daten aussagt, kann beispielsweise anstelle des zugeordneten Steuerdatensatzes ein Standard-Steuerdatensatz geschaltet beziehungsweise verwendet werden. Die Strecke die zur Auswertung der Genauigkeit vorgesehen wird, ist applizierbar. Eine schlechte Qualität bei erfassten Daten kann z.B. auftreten, wenn vor dem Fahrzeug ein Tunnel liegt und somit die Höhendaten oder andere Streckendaten nur sehr ungenau erfasst werden können.

Im Rahmen einer möglichen Ausführungsvariante kann bei dem erfindungsgemäßen Verfahren vorgesehen sein, dass als zukünftige Streckendaten der vor dem Fahrzeug liegenden Strecken beispielsweise die Höhe, die Neigung und/oder die Steigung der Fahrstrecke oder auch der jeweilige Straßentyp erfasst werden. Demzufolge kann die Getriebesteuerung die Informationen über die zukünftige Fahrstrecke auch daraufhin, welcher Straßentyp, z.B. eine Autobahn, eine Landstraße, Stadtverkehr oder dergleichen vorliegt, entsprechend auswerten. Vorzugsweise kann die Erfassung über ein mit dem Getriebesteuergerät gekoppeltes Navigationsgerät oder über ein anderes Navigationssystem erfolgen. Es sind jedoch auch andere Erfassungsmöglichkeiten einsetzbar, um entsprechende Daten der Fahrstrecke vor dem Fahrzeug zu erhalten.

Wenn beispielsweise durch die vorausschauenden Streckendaten ermittelt wird, dass sich das Fahrzeug nicht mehr auf einer Straße befindet, sondern im Gelände gefahren wird, so kann diesem Ereignis ebenfalls ein eigenes Datenfeld beziehungsweise ein eigener Steuerdatensatz zugeordnet werden.

Um aus diesen Werten Schalt- und Ansteuerstrategien zu entwickeln, können aus den erfassten Streckendaten zum Beispiel Mittelwerte berechnet werden, wobei die Mittelwerte mit applizierbaren Grenzwerten verglichen werden und entsprechend zugeordnete Steuerdatensätze aktiviert werden. Beispielsweise können aus den erfassten Höhen-, Steigungs- und/oder Neigungsangaben der zukünftigen Strecke durch das Getriebesteuergerät die durchschnittliche Steigung oder Neigung der Straße vor dem Fahrzeug berechnet werden. Diese Berechnung kann über eine parametrierbare Streckenlänge der zukünftigen Fahrstrecke erfolgen. Zum Beispiel kann somit eine durchschnittliche Steigung über die nächsten 300 m vor dem Fahrzeug ermittelt werden.

Gemäß einer vorteilhaften Weiterbildung der Erfindung kann nun vorgesehen sein, dass über einen Vergleich der durchschnittlichen Steigung oder Neigung mit zum Beispiel applizierbaren Grenzwerten unterschiedliche Datenfelder beziehungsweise Steuerdatensätze aktiviert werden. Es ist somit möglich, geringere Steigungen von z. B. 0-3 % einem vorbestimmten ersten Datenfeld beziehungsweise Steuerdatensatz zuzuordnen. Mittlere Steigungen z. B. von 3-7 % können einem vorbestimmten zweiten Steuerdatensatz und Steigungen von z. B. größer 7 % einem vorbestimmten dritten Steuerdatensatz zugeordnet werden. Auf diese Weise ist eine Abstimmung verbrauchsoptimal auf die vor dem Fahrzeug liegende Topographie in den verschiedenen Datenfeldern beziehungsweise Steuerdatensätzen möglich.

Um ein so genanntes Toggeln bei der Umschaltung zu vermeiden, welches ein mehrmaliges unbeabsichtigtes Hin- und Herschalten zwischen verschiedenen Steuerdatensätzen bedeutet, kann vorgesehen sein, dass vorbestimmte Hystereseschwellen oder dergleichen den erfassten Streckendaten verschiedener Steuerdatensätze zugeordnet werden. Durch die Hystereseschwellen für die Steigungs- und/oder Neigungsgrenzen zwischen den einzelnen Datenfeldern können diese unerwünschten Umschaltungen verhindert werden.

## Patentansprüche

1. Verfahren zum Steuern und/oder Regeln eines automatisierten Getriebes eines Fahrzeuges, insbesondere eines Nutzfahrzeuges, bei dem ein Getriebesteuergerät verwendet wird, in dem mehrere Steuerdatensätze zum Ausführen vorbestimmter Schalt- und/oder Ansteuerstrategien abgespeichert werden, wobei durch das Getriebesteuergerät eine dynamische oder statische Umschaltung zwischen verschiedenen Steuerdatensätzen anhand der gegenwärtigen Position oder der Art des Fahrzeuges durchgeführt wird, wobei auch zukünftige Streckendaten erfasst und ausgewertet werden, so dass die erfassten, zukünftigen Streckendaten im Rahmen der Auswertung bestimmten Steuerdatensätzen zugeordnet werden, um eine vorausschauende Ansteuerung des Fahrzeuges zu realisieren, **dadurch gekennzeichnet, dass** die erfassten zukünftigen Streckendaten bei der Auswertung mit einer die Qualität der erfassten Streckendaten beschreibende Zuverlässigkeits- oder Genauigkeitszahl versehen bzw. bewertet werden und bei Streckendaten mit einer negativen Zuverlässigkeitszahl oder Genauigkeitszahl eine Umschaltung auf einen Standard-Steuerdatensatz durchgeführt wird.

2. Verfahren nach Anspruch 1, **dadurch gekennzeichnet, dass** zukünftige Streckendaten der vor dem Fahrzeug liegenden Strecke hinsichtlich der Höhe und/oder der Neigung und/oder der Steigung und/oder des Straßentyps über einen mit dem Getriebesteuergerät gekoppelten Navigationsgerät erfasst werden.

3. Verfahren nach einem der vorangehenden Ansprüche, **dadurch gekennzeichnet, dass** aus den erfassten, zukünftigen Streckendaten Mittelwerte berechnet werden, wobei die Mittelwerte mit applizierbaren Grenzwerten verglichen werden und entsprechende zugeordnete Steuerdatensätze aktiviert werden.

4. Verfahren nach Anspruch 3, **dadurch gekennzeichnet, dass** einer mittleren Steigung der zukünftigen Strecke von 0-3 % ein erster Steuerdatensatz, einer mittleren Steigung der zukünftigen Strecke von 3-7 % ein zweiter Steuerdatensatz und einer mittleren Steigung der zukünftigen Strecke von größer 7 % ein dritter Steuerdatensatz zugeordnet werden.

5. Verfahren nach einem der vorangehenden Ansprüche, **dadurch gekennzeichnet, dass** vorbestimmte Hystereseschwellen den erfassten Streckendaten verschiedener Steuerdatensätze zugeordnet werden.

6. Verfahren nach Anspruch 5, **dadurch gekennzeichnet, dass** durch die Hystereseschwellen mehrfache, unerwünschte Umschaltungen zwischen verschiedenen Steuerdatensätzen verhindert werden.

## Claims

1. Method for controlling and/or regulating an automated transmission of a vehicle, in particular of a utility vehicle, in which a transmission control device is used in which a plurality of control data records for carrying out predetermined shift strategies and/or actuation strategies are stored, wherein the transmission control device carries out dynamic or static switching over between various control data records on the basis of the current position or the type of the vehicle, wherein future route data is also acquired and evaluated, with the result that the detected, future route data is assigned to specific control data records within the scope of the evaluation in order to implement predictive actuation of the vehicle, **characterized in that** during the evaluation the detected future route data is provided with a reliability coefficient or accuracy coefficient which describes the quality of the detected route data and/or are/is evaluated, and in the case of route data with a negative reliability coefficient or accuracy coefficient switching over to a standard control data record is carried out.

2. Method according to Claim 1, **characterized in that** future route data of the route lying ahead of the vehicle relating to the altitude and/or the inclination and/or the gradient and/or the type of road are detected by means of a navigation device which is coupled to the transmission control device.

3. Method according to one of the preceding claims, **characterized in that** mean values are calculated from the detected future route data, wherein the mean values are compared with applicable limiting values and corresponding assigned control data records are activated.

4. Method according to Claim 3, **characterized in that** a first control data record is assigned to a medium gradient of the future route of 0-3%, a second control data record is assigned to a medium gradient of the future route of 3-7%, and a third control data record is assigned to a medium gradient of the future route of greater than 7%.

5. Method according to one of the preceding claims, **characterized in that** predetermined hysteresis thresholds are assigned to the detected route data of various control data records.

6. Method according to Claim 5, **characterized in that** multiple undesired switching over operations between various control data records are prevented by the hysteresis thresholds.

## Revendications

1. Procédé de commande et/ou de régulation de la transmission automatique d'un véhicule, en particulier d'un véhicule utilitaire, le procédé utilisant un appareil de commande de transmission dans lequel plusieurs jeux de données de commande destinés à exécuter des stratégies prédéterminées de commutation et/ou de commande sont conservés en mémoire,
l'appareil de commande de transmission exécutant une commutation dynamique ou statique entre différents jeux de données de commande à l'aide de la position actuelle ou du type de véhicule,
des données de parcours futur étant saisies et évaluées de telle sorte que les données de parcours futur saisies soient associées à des jeux de données de commande définis dans le cadre de l'évaluation pour réaliser une commande prédictive du véhicule, **caractérisé en ce que**
les données de parcours futur saisies lors de l'évaluation sont dotées ou évaluées à l'aide d'un indice de fiabilité ou de précision qui décrit la qualité des données de parcours saisies et
**en ce qu'**une commutation sur un jeu de données de commande standard est réalisée au cas où les données de parcours présentent un indice négatif de fiabilité ou de précision.

2. Procédé selon la revendication 1, **caractérisé en ce que** des données concernant le parcours futur situé en avant du véhicule et l'altitude et/ou l'inclinaison et/ou la pente et/ou le type de chaussée sont saisies par l'intermédiaire d'un appareil de navigation couplé à l'appareil de commande de transmission.

3. Procédé selon l'une des revendications précédentes, **caractérisé en ce que** des valeurs moyennes sont calculées à partir des données de parcours futur saisies, les valeurs moyennes étant comparées à des valeurs limites applicables et **en ce que** des jeux de données de commande qui leur sont associés sont activés.

4. Procédé selon la revendication 3, **caractérisé en ce qu'**un premier jeu de données de commande est associé à une pente moyenne du parcours futur de 0 à 3 %, un deuxième jeu de données de commande est associé à une pente moyenne du parcours futur de 3 à 7 % et un troisième jeu de données de commande est associé à une pente moyenne du parcours futur supérieure à 7 %.

5. Procédé selon l'une des revendications précédentes, **caractérisé en ce que** des seuils prédéterminés d'hystérésis des données de parcours saisies sont associés à différents jeux de données de commande.

6. Procédé selon la revendication 5, **caractérisé en ce que** les seuils d'hystéréris empêchent des commutations multiples indésirables entre différents jeux de données de commande.
